# EUROPÄISCHE PATENTSCHRIFT

(11) **EP 3 287 951 B1**
(45) Veröffentlichungstag und Bekanntmachung des Hinweises auf die Patenterteilung: **20.01.2021**
(21) Anmeldenummer: 17181704.2
(22) Anmeldetag: 17.07.2017
(51) Int. Cl.: G06K 9/52, G06K 9/46

(54) **VERFAHREN FÜR DIE URHEBERSCHAFTSBEWERTUNG EINES GEMÄLDES**
METHOD FOR EVALUATING THE AUTHORSHIP OF A PAINTING
PROCÉDÉ PERMETTANT L'ÉVALUATION DE LA QUALITÉ D'AUTEUR D'UNE PEINTURE

(30) Priorität: 25.08.2016 DE 102016115837
(43) Veröffentlichungstag der Anmeldung: 28.02.2018
(73) Patentinhaber: Scholzen, Werner, 40721 Hilden (DE)
(72) Erfinder: Scholzen, Werner, 40721 Hilden (DE)
(74) Vertreter: Angerhausen, Christoph

(56) Entgegenhaltungen:
- EP-B1- 2 555 160
- DE-B4-102009 023 756
- US-A1- 2005 163 374
- JOHNSON C R ET AL: "Image processing for artist identification", IEEE SIGNAL PROCESSING MAGAZINE, IEEE SERVICE CENTER, PISCATAWAY, NJ, US, Bd. 25, Nr. 4, 1. Juli 2008 (2008-07-01), Seiten 37-48, XP011228189, ISSN: 1053-5888, DOI: 10.1109/MSP.2008.923513
- ORLOV N ET AL: "WND-CHARM: Multi-purpose image classification using compound image transforms", PATTERN RECOGNITION LETTERS, ELSEVIER, AMSTERDAM, NL, Bd. 29, Nr. 11, 1. August 2008 (2008-08-01), Seiten 1684-1693, XP022762721, ISSN: 0167-8655, DOI: 10.1016/J.PATREC.2008.04.013 [gefunden am 2008-05-07]
- LYU ET AL: "A digital technique for art authentication", PROCEEDINGS NATIONAL ACADEMY OF SCIENCES PNAS, NATIONAL ACADEMY OF SCIENCES, US, Bd. 101, Nr. 49, 7. Dezember 2004 (2004-12-07), Seiten 17006-17010, XP002601838, ISSN: 0027-8424, DOI: 10.1073.PNAS.0406398101 [gefunden am 2004-12-07]
- Lior Shamir: "What makes a Pollock Pollock: a machine vision approach", International Journal of Arts and Technology, vol. 8, no. 1, 1 January 2015 (2015-01-01) , pages 1-12, XP055530881, ISSN: 1754-8853, DOI: 10.1504/IJART.2015.067389

## Beschreibung

Die Erfindung geht aus von einem Verfahren für die Urheberschaftsbewertung eines Gemäldes gemäß dem Oberbegriff des Anspruchs 1. Ein derartiges Verfahren ist aus der folgenden Veröffentlichung bekannt: Shamir L: "What makes a Pollock a Pollock: a machine vision approach", International Journal of Arts and Technology, Bd. 8, Nr. 1, 1. Januar 2015, Seiten 1 -12. Ein weiteres Verfahren ist aus der Veröffentlichung Johnson C R et al.: "Image processing for artist identification", IEEE Signal Processing Magazine, Bd. 25, Nr. 4, 1. Juli 2008, Seiten 37-48 bekannt.

Die DE 10 2009 023 756 B4 beschreibt ein Verfahren zum Herkunftsnachweis und zur Urheberschaft von Bildern, das die Schritte aufweist:
a) Überführen des zu prüfenden Bildes oder von Teilen des zu prüfenden Bildes mit Hilfe eines Digitalisierungsmittels, insbesondere eines Scanners, in mindestens einen Datensatz;
b) Analyse des/der Datensatzes/-sätze und Bestimmung von charakterlichen Merkmalen oder Teilen von charakteristischen Merkmalen, insbesondere Punkten oder Linien oder Punkt- oder Liniengruppen oder Mustern, die digitalisiert in dem Datensatz enthalten sind, wobei die zu bestimmenden charakteristischen Merkmale in einer Datenbank hinterlegt sind;
c) wobei die Bestimmung der charakteristischen Merkmale in dem/den Datensatz/-sätzen durch den Vergleich des/der Datensatzes/-sätze mit den in der Datenbank vorliegenden charakteristischen Merkmalen vorgenommen wird und wobei das charakteristische Merkmal mit Hilfe von in einer Datenbank hinterlegten Mustervorlage der charakteristischen Merkmale konkret zugeordnet wird;
d) Bestimmung von Referenzmerkmalen mindestens eines der charakteristischen Merkmale oder von Teilen der charakteristischen Merkmale, die in dem/den Datensatz/-sätzen enthalten sind, wobei die Referenzmerkmale der charakteristischen Merkmale entweder bereits in der Datenbank hinterlegt sind oder während des laufenden Verfahrens erzeugt werden; und
e) wobei die Datenbank zu jedem dieser hinterlegten charakteristischen Merkmale einen zusätzlichen zugeordneten Datensatz aufweist.

Bevorzugt soll dabei für die Analyse und Bestimmung der charakteristischen Merkmale in dem zu prüfenden Bild oder in Teilen des zu prüfenden Bildes das Hough-Verfahren verwendet werden. Die Anwendung des Hough-Verfahrens hat jedoch gezeigt, dass sie keine zuverlässigen Ergebnisse liefert und damit keine zuverlässige Aussage über die Echtheit eines Gemäldes mit hinreichender Sicherheit erlaubt.

Es ist die Aufgabe der Erfindung, ein Verfahren der eingangs beschriebenen Art derart weiterzuentwickeln, dass es eine zuverlässige Urheberschaftsbewertung, mithin eine zuverlässige Echtheitsbestimmung eines Gemäldes erlaubt.

Diese Aufgabe wird durch ein Verfahren mit dem Merkmal des Anspruchs 1 gelöst.

Demgemäß wird ein Verfahren für die Urheberschaftsbewertung eines Gemäldes beschrieben, das die Schritte aufweist:
a) Bereitstellen einer Kollektion aus mehreren Originalgemälden eines bestimmten Künstlers und Erzeugen jeweils mindestens eines digitalen Abbilds jedes Originalgemäldes der Kollektion aus mehreren Originalgemälden;
b) Erfassen von Klassifikationsdaten für jedes der digitalen Abbilder jedes Originalgemäldes der Kollektion unter Anwendung des WND-CHARM-Verfahrens wobei die Klassifikationsdaten ein Referenzdatensatz von Klassifikationsdaten für Originalgemälde des Künstlers sind;
c) Bereitstellen eines weiteren Gemäldes und Erzeugen mindestens eines digitalen Abbilds des weiteren Gemäldes;
d) Erfassen von weiteren Klassifikationsdaten für das digitale Abbild des weiteren Gemäldes; und
e) Vergleichen der weiteren Klassifikationsdaten mit dem Referenzdatensatz von Klassifikationsdaten für Originalgemälde, wobei bei dem Erreichen oder Überschreiten einer Mindestübereinstimmung zwischen den weiteren Klassifikationsdaten und dem Referenzdatensatz auf ein Originalgemälde des Künstlers und anderenfalls auf eine Fälschung geschlossen wird,
wobei das Erfassen der Klassifikationsdaten und der weiteren Klassifikationsdaten unter Anwendung des WND-CHARM-Verfahrens erfolgt, dadurch gekennzeichnet, dass für homogene Anteile, insbesondere einfarbige und/oder detaillose Anteile des jeweiligen digitalen Abbilds oder eines jeweiligen Teilbildstücks keine Klassifikationsdaten erfasst werden, wobei die homogenen Anteile des digitalen Abbilds anhand eines Farbwert- oder Grauwert-Histogramms erfasst werden, indem eine maximale Anzahl von Farbwerten oder Grauwerten festgelegt wird, die in dem Histogramm eine bestimmte Mindesthäufigkeit aufweisen, wobei auf einen homogenen Anteil geschlossen wird, wenn in dem Histogramm des Anteils die Anzahl der Farbwerte oder Grauwerte, die die Mindesthäufigkeit aufweisen, kleiner als die maximale Anzahl ist,
wobei das jeweilige digitale Abbild gemäß einem ersten Raster aus aneinander grenzenden Teilbildstücken und weiterhin gemäß einem zweiten Raster aus aneinander grenzenden Teilbildstücken zerlegt wird, wobei das erste und das zweite Raster um einen Versatz in mindestens einer von zwei senkrecht zueinander stehenden Achsen in der Bildebene des digitalen Abbilds gegeneinander verschoben werden, und wobei das Erfassen von Klassifikationsdaten sowohl für die nach dem ersten Raster zerlegten Teilbildstücke als auch für die nach dem zweiten Raster zerlegten Teilbildstücke durchgeführt wird.

Der Erfindung liegt das Prinzip zugrunde, unter Anwendung des WND-CHARM-Verfahrens Klassifikationsdaten anhand einer Kollektion aus mehreren Originalgemälden zu erfassen und im Folgenden ebenfalls unter Anwendung des WND-CHARM-Verfahrens entsprechende Klassifikationsdaten für ein zu überprüfendes Gemälde zu erfassen. Bei einer bestimmten Mindestübereinstimmung der Klassifikationsdaten des zu überprüfenden Gemäldes mit den Klassifikationsdaten in dem Referenzdatensatz, die vom Anwender frei wählbar sein kann, wird auf ein Originalgemälde geschlossen. Untersuchungen haben gezeigt, dass bereits Kollektionen aus 10-15 Originalgemälden eines bestimmten Künstlers ausreichen können, um einen Referenzdatensatz von Klassifikationsdaten für Originalgemälde des betreffenden Künstlers zu erzeugen, welcher eine zuverlässige Originalitätsbestimmung eines zu überprüfenden Gemäldes erlaubt.

Das WND-CHARM-Verfahren ist in seinen Einzelheiten in der Veröffentlichung "WND-CHARM: Multi-purpose image classification using compound image transforms", Pattern Recognition Letters 29 (2008) 1684-1693 beschrieben. Die im Rahmen der Implementierung des WND-CHARM-Verfahrens erfindungsgemäß durchgeführten Analysemethoden sind im Detail in der vorgenannten Veröffentlichung beschrieben und sollen hier nicht wiederholt werden. Lediglich beispielhaft sei erwähnt. Dass diese Analysemethoden etwa kontrastbasierte Methoden sein können, wie die Kantendetektion unter Anwendung von Prewitt- bzw. Sobel-Operatoren, objektbasierte Analysemethoden unter Anwendung von OTSU-Maskierung sowie statistische Methoden, die die Auswertung von Histogrammen, Durchschnitten, Varianzen und/oder Min-/Max-Auswertungen umfassen. Es können weiterhin Texturen basierend auf Co-Occurrence-Matrizen nach dem Haralick-Verfahren oder sogenannte Tamura-Texturen ausgewertet werden. Es können weiterhin Fourier-, Chebyshev- oder Radon-Transformationen und/oder Bewertungen der Aussagekraft erfasster Merkmale mithilfe einer Fisher-Score-Auswertung durchgeführt werden. Sämtliche der zuvor genannten Methoden und darüber hinaus gehende Analyseverfahren sind Bestandteil des WND-CHARM-Verfahrens und innerhalb dieses in Bezug miteinander gesetzt.

Das Fisher-Score-Verfahren entstammt der mathematischen Statistik und dient zur Abschätzung der bestmöglichen Qualität von Parametern aus einem Satz von mehreren Parametern. Dies ermöglicht eine Gewichtung einzelner der mit den oben genannten Analysemethoden bestimmten Merkmale, wodurch eine Optimierung der Ergebnisse erreicht wird. So kann beispielsweise für jedes Merkmal (also z.B. eine ermittelte Tamura-Textur, eine Haralick-Textur, ein Multiscale-Histogramm etc.) eine Gewichtung erhalten werden, die Aufschluss darüber gibt, welche Relevanz das jeweilige Merkmal hat. Weitere Einzelheiten zur Relevanzprüfung mithilfe des WND-CHARM-Verfahrens sind dem weiter oben genannten Fachartikel zu entnehmen.

Eine weitere Steigerung der Zuverlässigkeit des Verfahrens kann dadurch erreicht werden, dass dieses weiterhin die Schritte aufweist:
aa) Bereitstellen einer Kollektion aus mehreren gefälschten Gemälden des Künstlers und Erzeugen jeweils mindestens eines digitalen Abbilds jedes gefälschten Gemäldes der Kollektion aus mehreren gefälschten Gemälden;
bb) Erfassen von Klassifikationsdaten für jedes der digitalen Abbilder jedes gefälschten Gemäldes der Kollektion gefälschter Gemälde unter Anwendung des WND-CHARM-Verfahrens wobei die Klassifikationsdaten ein Referenzdatensatz von Klassifikationsdaten für gefälschte Gemälde des Künstlers sind; und
ee) Vergleichen der weiteren Klassifikationsdaten mit dem Referenzdatensatz von Klassifikationsdaten für gefälschte Gemälde, wobei auf eine Fälschung geschlossen wird, wenn eine Übereinstimmung zwischen den weiteren Klassifikationsdaten und dem Referenzdatensatz von Klassifikationsdaten für gefälschte Gemälde größer als eine Übereinstimmung zwischen den weiteren Klassifikationsdaten und dem Referenzdatensatz von Klassifikationsdaten für Originalgemälde ist.

Es hat sich herausgestellt, dass bereits vergleichsweise kleine Teilbildstücke eines Gesamtgemäldes geeignet sind, um zuverlässig auf die Originalität eines Gemäldes schließen zu können. Es ist daher vorgesehen, dass vor dem jeweiligen Erfassen von Klassifikationsdaten der digitalen Abbilder der Originalgemälde, des weiteren Gemäldes oder der gefälschten Gemälde, das jeweilige digitale Abbild in Teilbildstücke zerlegt wird und das jeweilige Erfassen von Klassifikationsdaten von mindestens einem der Teilbildstücke durchgeführt wird.

Dabei wird das jeweilige digitale Abbild gemäß einem ersten Raster aus aneinander grenzenden Teilbildstücken und weiterhin gemäß einem zweiten Raster aus aneinander grenzenden Teilbildstücken zerlegt, wobei das erste und das zweite Raster um einen Versatz in mindestens einer von zwei senkrecht zueinander stehenden Achsen in der Bildebene des digitalen Abbilds gegeneinander verschoben werden, und wobei das Erfassen von Klassifikationsdaten sowohl für die nach dem ersten Raster zerlegten Teilbildstücke, oder eine Teilmenge dieser, als auch für die nach dem zweiten Raster zerlegten Teilbildstücke, oder eine Teilmenge dieser, durchgeführt wird.

Vor dem jeweiligen Erfassen von Klassifikationsdaten für das jeweilige digitale Abbild der Originalgemälde, des weiteren Gemäldes oder der gefälschten Gemälde kann ein Farbwert- oder Grauwert-Histogrammausgleich auf das jeweilige Abbild angewendet werden. Dabei wird der gesamte zur Verfügung stehende Farbwertebereich ausgenutzt und mittels Spreizung der Eingabedaten der bestehende genutzte Farbwertebereich nahezu auf eine Gleichverteilung über den gesamten zur Verfügung stehenden Farbwertebereich gebracht.

Weiterhin kann vor dem Erfassen ein Weichzeichner, insbesondere ein Gaußfilter auf das jeweilige digitale Abbild oder ein Teilbildstück dieses angewendet werden, um den Einfluss von Verunreinigungen und/oder Kratzern auf dem jeweiligen Gemälde zu verringern.

Die digitalen Abbilder der Kollektion aus mehreren gefälschten Gemälden beziehungsweise Originalgemälden und ebenfalls das Abbild des weiteren zu überprüfenden Gemäldes können fotografisch erzeugt werden, wobei jedes Abbild als eine aus einer Vielzahl Bildpixeln zusammengesetzte Bilddatei bereitgestellt wird.

Weitere Einzelheiten der Erfindung werden anhand der nachstehenden Figuren erläutert. Dabei zeigt:
- Figur 1: ein schematisches Flussdiagramm für die Durchführung eines Verfahrens für die Urheberschaftsbewertung eines Gemäldes nach einer Ausführungsform der Erfindung;
- Figur 2: ein beispielhaftes digitales Abbild, das gemäß einem ersten und einem zweiten Raster zerlegt wird;
- Figur 3: veranschaulicht schematisch die Durchführung eines Histogrammausgleichs;
- Figur 4: veranschaulicht die Filterung homogener Abbildbestandteile; und
- Figur 5: veranschaulicht den Anteil der gefilterten homogenen Bildbestandteile in Abhängigkeit der gewählten Filtertoleranz.

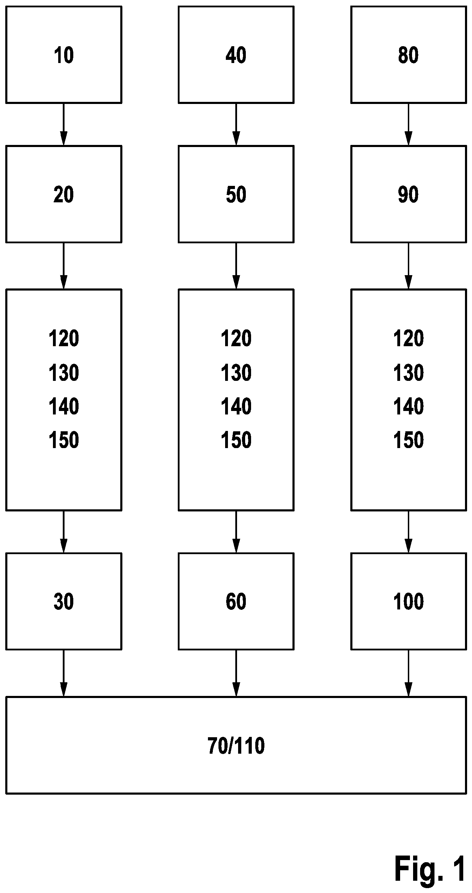

In Figur 1 ist zur Veranschaulichung des erfindungsgemäßen Verfahrens gemäß einer Ausbildungsform ein Ablaufdiagramm gezeigt. Demgemäß wird in einem Schritt 10 eine Kollektion aus mehreren Originalgemälden eines bestimmten Künstlers bereitgestellt. Die Kollektion kann entsprechend weiteren Unterscheidungsmerkmale unterteilt sein, beispielsweise können bestimmte Gemälde der Kollektion einer bestimmten Epoche zugewiesen sein. Dies kann insofern zur Erhöhung der Datenqualität beitragen, als dass im folgenden auch das zu überprüfende Gemälde, entsprechend der Epoche, der es entstammen soll, nur anhand der Klassifikationsdaten der Originalgemälde verglichen wird, die der betreffenden Epoche zugehören.

In dem Schritt 20 wird jeweils mindestens ein digitales Abbild jedes Originalgemäldes der Kollektion erzeugt, wobei dies vorzugsweise fotografisch erfolgt, so dass das erzeugte Abbild aus mehreren Bildpixeln zusammengesetzt ist. Dazu kann eine fotografische Apparatur verwendet werden, die einen gängigen digitalen Bildsensor aufweist, beispielsweise einen CCD- oder einen CMOS-Sensor.

In dem Schritt 30 werden Klassifikationsdaten für jedes der digitalen Abbilder jedes Originalgemäldes der Kollektion unter Anwendung des WND-CHARM-Verfahrens erfasst und die Klassifikationsdaten bilden einen Referenzdatensatz von Klassifikationsdaten für Originalgemälde des betreffenden Künstlers. Die gemäß dem WND-CHARM-Verfahren verwendeten Analysemethoden sind umfassend in dem Fachartikel WND-CHARM: Multi-purpose image classification using compound image transforms, Pattern Recognition Letters 29 (2008) 1684-1693 beschrieben.

In dem Schritt 40 wird ein weiteres, auf Originalität zu überprüfendes Gemälde bereitgestellt, wobei in dem Schritt 50 mindestens ein digitales Abbild dieses zur Überprüfung des Gemäldes erzeugt wird. Auch dies kann wieder fotografisch in der zuvor beschriebenen Weise erzeugt werden. In dem Schritt 60 werden Klassifikationsdaten für das digitale Abbild des weiteren Gemäldes unter Anwendung des WND-CHARM-Verfahrens erfasst.

Zur weiteren Verbesserung des Überprüfungsergebnisses wird in einem Schritt 80 eine Kollektion aus mehreren gefälschten Gemälden des Künstlers bereitgestellt. Die gefälschten Gemälde des Künstlers zeichnen sich dadurch aus, dass sie vorgeben, aus der Hand des Künstlers der im Schritt 10 bereitgestellten Originalgemälde zu sein, was jedoch nicht zutrifft, so dass die gefälschten Gemälde tatsächlich von einem anderen Künstler geschaffen worden sind. Es ist für die Erfindung jedoch insbesondere nicht zwingend erforderlich, dass die gefälschten Gemälde Nachahmungen tatsächlich existierender Originalgemälde des Künstlers sind. Es ist ebenso nicht erforderlich, dass es sich bei den gefälschten Gemälden zumindest teilweise um Gemälde handelt, die in der Kollektion der Originalgemälde enthalten sind. Ebenso ist es für die Erfindung nicht erforderlich, dass das zu überprüfende, weitere Gemälde ein Gemälde ist, welches in zumindest einer der Kollektionen aus Originalgemälden und gefälschten Gemälden enthalten ist. Entsprechend dem WND-CHARM-Verfahren beruht die Erfindung allein darauf, Klassifikationsdaten, die anhand von Originalgemälden eines bestimmten Künstlers und gegebenenfalls anhand von gefälschten Gemälden, die dem bestimmten Künstler zugeschrieben werden, zu erfassen, um diese als Vergleichsklassifikationsdaten, die gegebenenfalls in einer Datenbank nach der einmaligen Erfassung vorgehalten werden, mit entsprechenden Klassifikationsdaten des digitalen Abbilds eines weiteren Gemäldes, dessen Urheberschaft unbekannt ist, zu vergleichen, so dass anhand des Übereinstimmungsgrades der Klassifikationsdaten des weiteren Gemäldes mit den Klassifikationsdaten der Originalgemälde und gegbenenfalls den Klassifikationsdaten der gefälschten Gemälde auf die Originalität des weiteren Gemäldes geschlossen werden kann.

Es liegt im Belieben des Anwenders, wo er die prozentuale Schwelle des Übereinstimmungsgrades der verglichenen Klassifikationsdaten legt, um auf ein Original oder eine Fälschung schließen zu wollen. Es hat sich jedoch herausgestellt, dass durch die Anwendung des CHARM-Verfahrens selbst bei "guten Fälschungen" mit dem erfindungsgemäßen Verfahren immer noch tendenziell eine geringe Übereinstimmung der erfassten Klassifikationsdaten des weiteren Gemäldes mit den Klassifikationsdaten der Originalgemälde beziehungsweise eine erhöhte Übereinstimmung der Klassifikationsdaten des weiteren Gemäldes mit den Klassifikationsdaten der gefälschten Gemälde erfasst werden konnte und somit bei einer Stichprobe von 20 Gemälden in 100% der Fälle die Originalität bzw. fehlende Originalität anhand des Übereinstimmungsgrades der verglichenen Klassifikationsdaten korrekt bestimmt werden konnte. Selbst bei "guten Fälschungen", bei denen die Klassifikationsdaten des weiteren Gemäldes, mithin der Fälschung, einen gewissen Übereinstimmungsgrad mit den Klassifikationsdaten der Kollektion der Originalgemälde aufweist, konnte tendenziell immer noch eine überwiegende Abweichung zwischen den verglichenen Klassifikationsdaten der Originalgemälde beziehungsweise eine überwiegende Übereinstimmung mit den Klassifikationsdaten der gefälschten Gemälde erfasst werden und damit im Ergebnis die korrekte Bewertung getroffen werden.

In den Schritten 70 und 110 werden die weiteren Klassifikationsdaten mit dem Referenzdatensatz von Klassifikationsdaten für Originalgemälde beziehungsweise für gefälschte Gemälde verglichen. Beim Vergleich der weiteren Klassifikationsdaten mit dem Referenzdatensatz von Klassifikationsdaten für Originalgemälde wird bei dem Erreichen oder Überschreiten einer Mindestübereinstimmung zwischen den weiteren Klassifikationsdaten und dem Referenzdatensatz auf ein Originalgemälde des Künstlers und anderenfalls auf eine Fälschung geschlossen. Bei dem Vergleich 110 der weiteren Klassifikationsdaten mit dem Referenzdatensatz von Klassifikationsdaten für gefälschte Gemälde wird auf eine Fälschung geschlossen, wenn eine Übereinstimmung zwischen den weiteren Klassifikationsdaten und dem Referenzdatensatz von Klassifikationsdaten für gefälschte Gemälde größer als eine Übereinstimmung zwischen den weiteren Klassifikationsdaten und dem Referenzdatensatz von Klassifikationsdaten für Originalgemälde ist, und wobei anderenfalls auf ein Originalgemälde geschlossen wird. Entsprechend dem CHARM-Verfahren können die verschiedenen anhand der Klassifikationsdaten auf Übereinstimmung überprüften Einzelmerkmale unterschiedlich gewichtet werden, so dass bei beispielsweise 1000 überprüften Einzelmerkmalen schon eine Abweichung in wenigen, etwa 50 prägnanten und entsprechend stärker gewichteten Einzelmerkmalen auf eine Fälschung geschlossen werden kann.

Es hat sich herausgestellt, dass beide Vergleiche 70, 110, für sich genommen, stets zu demselben Ergebnis hinsichtlich der Originalitätsbestimmung geführt haben, so dass das erfindungsgemäße Verfahren eine systemimmanente Selbstvalidierung aufweisen kann. Würde das Ergebnis des Schrittes 70 konträr zu dem des Schrittes 110 sein, dass heißt der eine Schritt auf die Originalität des zu überprüfenden Gemäldes schließen lassen und der andere Schritt auf ein gefälschtes Gemälde, so könnte anhand dieses Mechanismus verifiziert werden, dass eine sichere Originalitätsbestimmung nicht möglich ist.

Die zu überprüfenden Gemälde, sowohl die Originalgemälde aus der Kollektion mehrerer Originalgemälde, als auch die gefälschten Gemälde der Kollektion gefälschter Gemälde, und ebenso das weitere, auf Originalität zu überprüfende Gemälde können verschiedenen Vorverarbeitungsschritten unterzogen werden. Diese sollten insbesondere den Schritten 30, 60, 100, das heißt dem Erfassen der jeweiligen Klassifikationsdaten vorangestellt werden und beispielsweise darauf abzielen, den Verarbeitungsprozess zu vereinfachen und/oder die Ausbeute bei der Klassifikationsdatenerfassung, das heißt die Datenqualität zu erhöhen.

Es kann vorgesehen sein, das in einem Schritt 120 das jeweilige digitale Abbild eines Originalgemäldes, eines gefälschten Gemäldes oder eines auf Originalität zu überprüfenden Gemäldes in Teilbildstücke zerlegt wird, wobei das jeweilige Erfassen 30, 60, 100 von Klassifikationsdaten im Folgenden für zumindest eines der Teilbildstücke durchgeführt wird. Je nach Informationsdichte des gewählten Teilbildstücks kann bereits die Auswertung eines der Teilbildstücke ausreichend sein, um die beschriebene Originalität zu überprüfen und mit hinreichender Sicherheit durchzuführen, das heißt insbesondere um eine ausreichende Klassifikationsdatenmenge zu erzeugen, die eine zuverlässige Beurteilung der Originalität zulässt.

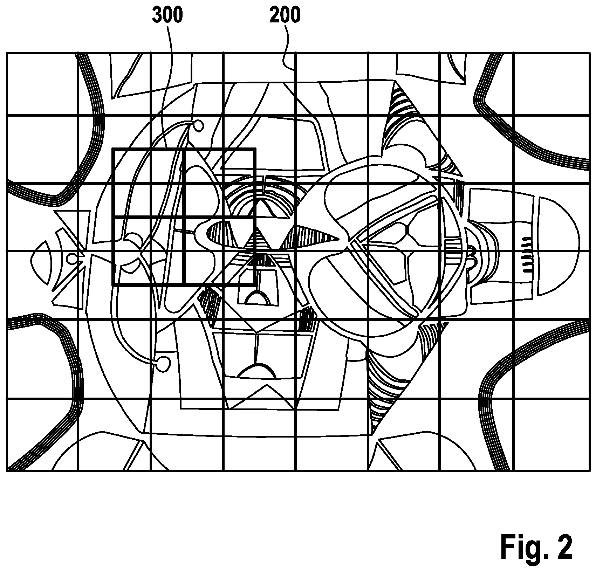

Bei dem Zerlegen des Abbilds in Teilbildstücke kann das jeweilige digitale Abbild gemäß einem ersten Raster 200 aus aneinander grenzenden Teilbildstücken und weiterhin gemäß einem zweiten Raster 300 aus aneinander grenzenden Teilbildstücken zerlegt werden, wobei das erste und das zweite Raster 200, 300 um ein Offset in mindestens einer von zwei senkrecht zueinander stehenden Achsen in der Bildebene des digitalen Abbilds gegeneinander verschoben werden. Dies ist im Detail in Figur 2 veranschaulicht. Das Erfassen 30, 60, 100 von Klassifikationsdaten kann dann sowohl für die nach dem ersten Raster 200 zerlegten Teilbildstücke als auch für die nach dem zweiten Raster 300 zerlegten Teilbildstücke durchgeführt werden. Zur besseren Übersicht ist in Figur 2 das zweite Raster 300 lediglich ausschnittsweise gezeigt. Mit Hilfe der beschriebenen Rasterverschiebung kann vermieden werden, dass beispielsweise bei der Struktur- oder Texturerkennung Informationen dadurch verloren gehen, dass die genannten Texturen oder Strukturen über die Trennlinien des Rasters zerteilt werden und damit bei der Erfassung der Klassifikationsdaten aus dem Zusammenhang gerissen werden und möglicherweise unberücksichtigt bleiben.

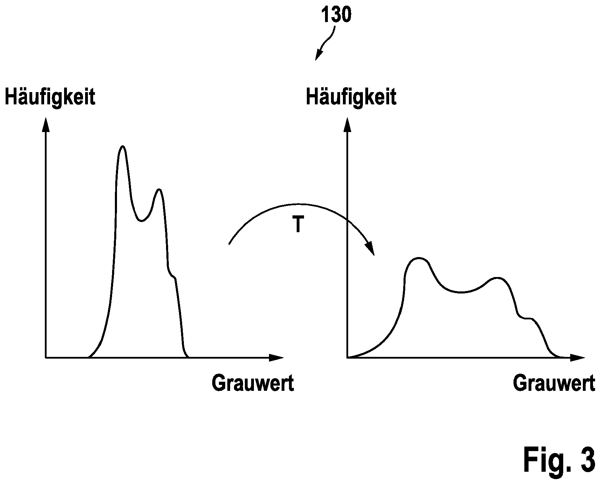

Wie in Figur 3 veranschaulicht ist, kann vor dem Erfassen 30, 60, 100 von Klassifikationsdaten auf das jeweilige digitale Abbild ein Farbwert- oder Grauwert-Histogrammausgleich angewendet werden, bei dem das von dem jeweiligen Abbild genutzte Farbspektrum oder Grauwertspektrum auf einen gesamten verfügbaren Farbraum beziehungsweise Grauwertraum transformiert wird, wobei der Histogrammausgleich entweder auf das gesamte Abbild oder auf ein Teilbildstück angewendet wird.

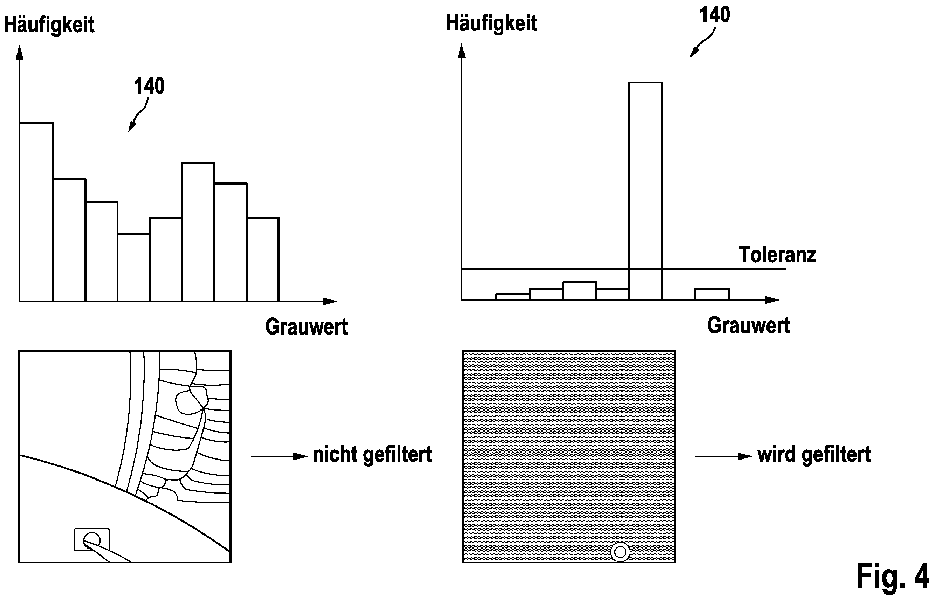

Mit Bezug auf Figur 4 ist eine weitere Maßnahme zur Vorverarbeitung der digitalen Abbilder beschrieben. Hierbei werden zur Vereinfachung des Prozesses und gleichzeitig zur Verbesserung der Klassifikationsdatenqualität nach der mit Bezug auf Figur 2 beschriebenen Rasterung des digitalen Abbilds für homogene Anteile, insbesondere einfarbige und/oder detaillose Anteile des jeweiligen digitalen Abbilds oder eines jeweiligen Teilbildstücks keine Klassifikationsdaten erfasst werden. Dem liegt die Annahme zugrunde, dass die homogenen Anteile entweder keine auswertbaren Klassifikationsdaten aufweisen oder diese Klassifikationsdaten aufgrund der Homogenität des betroffenen Bildanteils keine Aussagekraft im Hinblick auf die Originalitätsbestimmung aufweisen. Für die Herausfilterung der homogenen Anteile kann vorgesehen sein, dass das digitale Abbild anhand eines Farbwert- oder Grauwert-Histogramms in einem Schritt 140 erfasst werden, indem eine maximale Anzahl von Farbwerten oder Grauwerten festgelegt wird, die in dem Histogramm eine bestimmte Mindesthäufigkeit aufweisen. Dabei wird auf einen homogenen Anteil geschlossen, wenn in dem Histogramm des Anteils die Anzahl der Farbwerte oder Grauwerte, die die Mindesthäufigkeit aufweisen, kleiner als die maximale Anzahl ist.

Als weitere Maßnahme der Vorverarbeitung kann vor dem Erfassen 30, 60, 100 ein Weichzeichner und insbesondere ein Gaußfilter auf das jeweilige digitale Abbild, beziehungsweise das verarbeitete Teilbildstück in einem Schritt 150 angewendet werden, um den Einfluss von Verunreinigungen und/oder Kratzern auf dem jeweiligen Gemälde zu verringern.

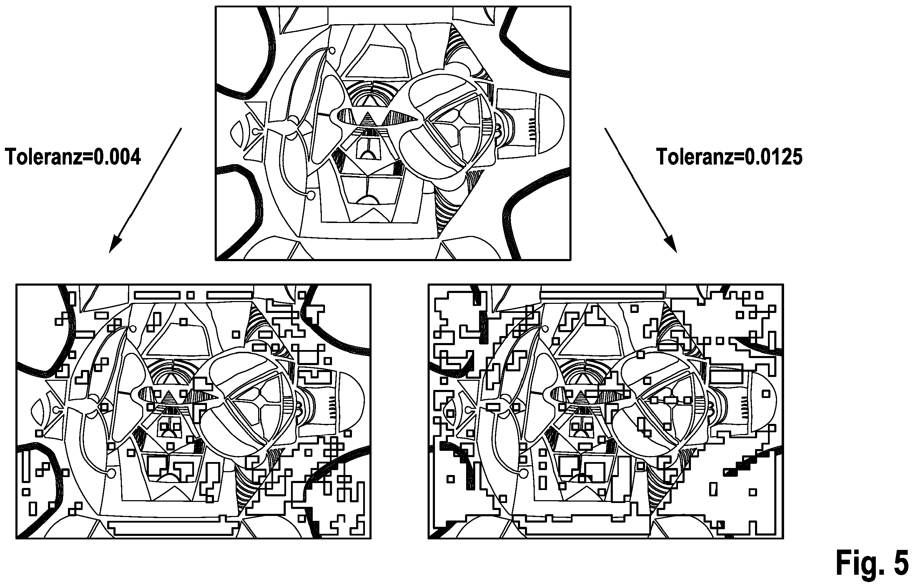

In der Zusammenschau der Figuren 4 und 5 ist zu erkennen, dass sich der Anteil herausgefilterter homogener Bildanteile beziehungsweise der herausgefilterten Teilbildstücke mit der Toleranzschwelle erhöht oder verringert. Je höher die Toleranzschwelle liegt, desto mehr Bildbestandteile werden herausgefiltert. Hierbei wird die Annahme gemacht, dass insbesondere inhomogene Bildbestandteile für das beschriebene Verfahren zur Originalitätsbestimmung besonders geeignet sind. Bei annähernd monochromen Gemälden kann es daher erforderlich sein, die Toleranzschwelle niedrig zu halten und insbesondere die mit Bezug auf Figur 3 beschriebene Histogrammausweitung durchzuführen, um in dem Gemälde vorhandene Strukturen besser herauszuarbeiten.

## Patentansprüche

1. Verfahren für die Urheberschaftsbewertung eines Gemäldes, das die Schritte aufweist:
a) Bereitstellen (10) einer Kollektion aus mehreren Originalgemälden eines bestimmten Künstlers und Erzeugen (20) jeweils mindestens eines digitalen Abbilds jedes Originalgemäldes der Kollektion aus mehreren Originalgemälden;
b) Erfassen (30) von Klassifikationsdaten für jedes der digitalen Abbilder jedes Originalgemäldes der Kollektion wobei die Klassifikationsdaten ein Referenzdatensatz von Klassifikationsdaten für Originalgemälde des Künstlers sind;
c) Bereitstellen (40) eines weiteren Gemäldes und Erzeugen (50) mindestens eines digitalen Abbilds des weiteren Gemäldes;
d) Erfassen (60) von weiteren Klassifikationsdaten für das digitale Abbild des weiteren Gemäldes; und
e) Vergleichen (70) der weiteren Klassifikationsdaten mit dem Referenzdatensatz von Klassifikationsdaten für Originalgemälde, wobei bei dem Erreichen oder Überschreiten einer Mindestübereinstimmung zwischen den weiteren Klassifikationsdaten und dem Referenzdatensatz auf ein Originalgemälde des Künstlers und anderenfalls auf eine Fälschung geschlossen wird,
wobei das Erfassen (30, 60) der Klassifikationsdaten und der weiteren Klassifikationsdaten unter Anwendung des WND-CHARM-Verfahrens erfolgt, **dadurch gekennzeichnet, dass** für homogene Anteile, insbesondere einfarbige und/oder detaillose Anteile des jeweiligen digitalen Abbilds oder eines jeweiligen Teilbildstücks keine Klassifikationsdaten erfasst werden, wobei die homogenen Anteile des digitalen Abbilds anhand eines Farbwert- oder Grauwert-Histogramms erfasst werden (140), indem eine maximale Anzahl von Farbwerten oder Grauwerten festgelegt wird, die in dem Histogramm eine bestimmte Mindesthäufigkeit aufweisen, wobei auf einen homogenen Anteil geschlossen wird, wenn in dem Histogramm des Anteils die Anzahl der Farbwerte oder Grauwerte, die die Mindesthäufigkeit aufweisen, kleiner als die maximale Anzahl ist,
wobei das jeweilige digitale Abbild gemäß einem ersten Raster (200) aus aneinander grenzenden Teilbildstücken und weiterhin gemäß einem zweiten Raster (300) aus aneinander grenzenden Teilbildstücken zerlegt (120) wird, wobei das erste und das zweite Raster (200, 300) um einen Versatz in mindestens einer von zwei senkrecht zueinander stehenden Achsen in der Bildebene des digitalen Abbilds gegeneinander verschoben werden, und wobei das Erfassen (30, 60, 100) von Klassifikationsdaten sowohl für die nach dem ersten Raster (200) zerlegten (120) Teilbildstücke als auch für die nach dem zweiten Raster (300) zerlegten (120) Teilbildstücke durchgeführt wird.

2. Verfahren nach Anspruch 1, das weiterhin die Schritte aufweist:
aa) Bereitstellen (80) einer Kollektion aus mehreren gefälschten Gemälden des Künstlers und Erzeugen (90) jeweils mindestens eines digitalen Abbilds jedes gefälschten Gemäldes der Kollektion aus mehreren gefälschten Gemälden;
bb) Erfassen (100) von Klassifikationsdaten für jedes der digitalen Abbilder jedes gefälschten Gemäldes der Kollektion gefälschter Gemälde unter Anwendung des WND-CHARM-Verfahrens wobei die Klassifikationsdaten ein Referenzdatensatz von Klassifikationsdaten für gefälschte Gemälde des Künstlers sind; und
ee) Vergleichen (110) der weiteren Klassifikationsdaten mit dem Referenzdatensatz von Klassifikationsdaten für gefälschte Gemälde, wobei auf eine Fälschung geschlossen wird, wenn eine Übereinstimmung zwischen den weiteren Klassifikationsdaten und dem Referenzdatensatz von Klassifikationsdaten für gefälschte Gemälde größer als eine Übereinstimmung zwischen den weiteren Klassifikationsdaten und dem Referenzdatensatz von Klassifikationsdaten für Originalgemälde ist.

3. Verfahren nach einem der vorangegangen Ansprüche, bei dem vor dem jeweiligen Erfassen (30, 60, 100) von Klassifikationsdaten auf das jeweilige digitale Abbild ein Farbwert- oder Grauwert-Histogrammausgleich angewendet wird (130), wobei der Histogrammausgleich entweder auf das gesamte Abbild oder auf ein Teilbildstück angewendet wird.

4. Verfahren nach einem der vorangegangen Ansprüche, bei dem vor dem Erfassen (30, 60, 100) ein Weichzeichner, insbesondere ein Gaußfilter auf das jeweilige digitale Abbild angewendet wird (150), um den Einfluss von Verunreinigungen und/oder Kratzern auf dem jeweiligen Gemälde zu verringern.

5. Verfahren nach einem der vorangegangen Ansprüche, bei dem die digitalen Abbilder der Kollektionen aus mehreren gefälschten Gemälden bzw. Originalgemälden sowohl das Abbild des weiteren Gemäldes fotografisch erzeugt werden (20, 50, 90), wobei jedes Abbild als eine aus einer Vielzahl Bildpixeln zusammengesetzte Bilddatei bereitgestellt wird.

## Claims

1. A method for assessing the authorship of a painting comprising the steps
a) providing (10) a collection of a plurality of original paintings by a particular artist and generating (20) at least one digital image of each original painting of the collection of a plurality of original paintings;
b) acquiring (30) classification data for each of the digital images of each original painting of the collection, wherein the classification data is a reference data set of classification data for original paintings of the artist;
c) providing (40) a further painting and creating (50) at least one digital image of the further painting;
d) acquiring (60) further classification data for the digital image of the further painting; and
e) comparing (70) the further classification data with the reference data set of classification data for original paintings, whereby if a minimum agreement is reached or exceeded between the further classification data and the reference data set, an original painting of the artist is concluded and otherwise a forgery is concluded,
wherein the acquisition (30, 60) of the classification data and the further classification data is carried out using the WND-CHARM method, **characterized in that** no classification data are acquired for homogeneous portions, in particular monochrome and/or detail-less portions of the respective digital image or of a respective partial image piece, wherein the homogeneous portions of the digital image are detected (140) by means of a color value or gray value histogram by determining a maximum number of color values or gray values having a certain minimum frequency in the histogram, wherein a homogeneous portion is concluded if the number of color values or gray values having the minimum frequency in the histogram of the portion is smaller than the maximum number,
wherein the respective digital image is decomposed (120) according to a first raster (200) of adjoining image portions and further according to a second raster (300) of adjoining image portions, wherein the first and second rasters (200, 300) can be shifted relative to one another by an offset in at least one of two axes perpendicular to one another in the image plane of the digital image, and wherein the acquisition (30, 60, 100) of classification data is carried out both for the partial image sections decomposed (120) according to the first raster (200) and for the partial image sections decomposed (120) according to the second raster (300).

2. The method according to claim 1, which further comprises the steps
aa) providing (80) a collection of a plurality of fake paintings of the artist and generating (90) at least one digital image of each fake painting of the collection of a plurality of fake paintings;
bb) acquiring (100) classification data for each of the digital images of each fake painting of the fake painting collection using the WND-CHARM method, the classification data being a reference set of classification data for fake paintings of the artist; and
ee) comparing (110) the further classification data with the reference data set of classification data for fake paintings, wherein a fake is concluded if a match between the further classification data and the reference data set of classification data for fake paintings is greater than a match between the further classification data and the reference data set of classification data for original paintings.

3. The method according to one of the preceding claims, in which, prior to the respective acquisition (30, 60, 100) of classification data, a color value or gray value histogram equalization is applied (130) to the respective digital image, wherein the histogram equalization is applied either to the entire image or to a partial image piece.

4. The method according to one of the preceding claims, in which a soft-focus filter, in particular a Gaussian filter, is applied (150) to the respective digital image prior to acquisition (30, 60, 100) in order to reduce the influence of impurities and/or scratches on the respective painting.

5. The method according to one of the preceding claims, in which the digital images of the collections of several fake paintings or original paintings are photographically generated (20, 50, 90) both the image of the further painting and the image of the further painting, wherein each image is provided as an image file composed of a plurality of image pixels.

## Revendications

1. Procédé destiné à évaluer la paternité d'un tableau, qui comporte les étapes suivantes :
a) fourniture (10) d'une collection de plusieurs tableaux originaux d'un artiste défini et production (20) de respectivement au moins une image numérique de chaque tableau original de la collection de plusieurs tableaux originaux ;
b) saisie (30) de données de classification pour chacune des images numériques de chaque tableau original de la collection, les données de classification étant un jeu de données de référence de données de classification pour le tableau original de l'artiste ;
c) fourniture (40) d'un autre tableau et production (50) d'au moins une image numérique de l'autre tableau ;
d) saisie (60) d'autres données de classification pour l'image numérique de l'autre tableau ; et
e) comparaison (70) des autres données de classification avec le jeu de données de référence de données de classification pour des tableaux originaux, à l'occasion de quoi il est conclu qu'il s'agit d'un tableau original de l'artiste quand une concordance minimale entre les autres données de classification et le jeu de données de référence est atteinte ou dépassée, sinon il est conclu à une contrefaçon,
la saisie (30, 60) des données de classification et des autres données de classification s'effectuant en utilisant le procédé WND-CHARM, **caractérisé en ce que**, pour des fractions homogènes, en particulier des fractions monochromes et/ou dépourvues de détails, de l'image numérique respective ou d'une partie d'image partielle respective, aucune donnée de classification n'est saisie, les fractions homogènes de l'image numérique étant saisies (140) à l'aide d'un histogramme de valeurs de couleur ou de valeurs de gris par le fait qu'un nombre maximal de valeurs de couleur ou de valeurs de gris est stipulé, qui présentent dans l'histogramme une fréquence minimale définie, où il est conclu à une fraction homogène quand, dans l'histogramme de la fraction, le nombre de valeurs de couleur ou de valeurs de gris qui présentent la fréquence minimale est inférieur au nombre maximal,
l'image numérique respective étant décomposée (120) selon une première trame (200) de parties d'image partielles adjacentes et en outre selon une deuxième trame (300) de parties d'image partielles adjacentes, la première et la deuxième trame (200, 300) étant déplacées l'une vers l'autre selon un décalage dans au moins un de deux axes perpendiculaires entre eux dans le plan d'image de l'image numérique, et la saisie (30, 60, 100) de données de classification étant effectuée aussi bien pour les parties d'image partielles décomposées (120) selon la première trame (200) que pour les parties d'image partielles décomposées (120) selon la deuxième trame (300).

2. Procédé selon la revendication 1, qui comporte en outre les étapes suivantes :
aa) fourniture (80) d'une collection de plusieurs tableaux contrefaits de l'auteur et production (90) de respectivement au moins une image numérique de chaque tableau contrefait de la collection de plusieurs tableaux contrefaits ;
bb) saisie (100) de données de classification pour chacune des images numériques de chaque tableau contrefait de la collection de tableaux contrefaits en utilisant le procédé WND-CHARM, les données de classification étant un jeu de données de référence de données de classification pour des tableaux contrefaits de l'artiste ; et
ee) comparaison (110) des autres données de classification avec le jeu de données de référence de données de classification pour des tableaux contrefaits, à l'occasion de quoi il est conclu qu'il s'agit d'une contrefaçon quand une concordance entre les autres données de classification et le jeu de données de référence de données de classification pour des tableaux contrefaits est plus grande qu'une concordance entre les autres données de classification et le jeu de données de référence de données de classification pour des tableaux originaux.

3. Procédé selon l'une des revendications précédentes, dans lequel, avant la saisie (30, 60, 100) respective de données de classification, une égalisation d'histogramme de valeurs de couleurs ou de valeurs de gris est appliquée (130) à l'image numérique respective, l'égalisation d'histogramme étant appliquée soit à la totalité de l'image soit à une partie d'image partielle.

4. Procédé selon l'une des revendications précédentes, dans lequel, avant la saisie (30, 60, 100), un flou, en particulier un filtre gaussien, est appliqué (150) à l'image numérique respective pour réduire l'influence d'impuretés et/ou d'éraflures sur le tableau respectif.

5. Procédé selon l'une des revendications précédentes, dans lequel les images numériques des collections de plusieurs tableaux falsifiés ou respectivement de tableaux originaux ainsi que l'image de l'autre tableau sont produites (20, 50, 90) photographiquement, chaque image étant fournie en tant que fichier image composé d'une multiplicité de pixels d'image.
